# EUROPÄISCHE PATENTSCHRIFT

(11) **EP 3 310 712 B1**
(45) Veröffentlichungstag und Bekanntmachung des Hinweises auf die Patenterteilung: **13.10.2021**
(21) Anmeldenummer: 16731818.7
(22) Anmeldetag: 08.06.2016
(51) Int. Cl.: C01C 3/10

(54) **EFFIZIENTES VERFAHREN ZUM ENTGIFTEN VON CYANIDHALTIGEN ABGASEN UND ABWÄSSERN IN EINEM VERFAHREN ZUR HERSTELLUNG VON ALKALIMETALLCYANIDEN**
EFFICIENT METHOD FOR DECONTAMINATING WASTE GASES AND WASTE WATER CONTAINING CYANIDE IN A METHOD FOR PRODUCING ALKALI METAL CYANIDES
PROCÉDÉ EFFICACE DE DÉCONTAMINATION DES EFFLUENTS GAZEUX ET DES EAUX USÉES CONTENANT DU CYANURE DANS UN PROCÉDÉ DE PRODUCTION DE CYANURES DE MÉTAUX ALCALINS

(30) Priorität: 18.06.2015 DE 102015211233
(43) Veröffentlichungstag der Anmeldung: 25.04.2018
(60) Teilanmeldung: 20159804.2
(73) Patentinhaber: EPC Engineering & Technologies GmbH, 99310 Arnstadt (DE)
(72) Erfinder: HENKEL, Jens, 98746 Meuselbach-Schwarzmühle (DE); RASSBACH, Jürgen, 99310 Arnstadt (DE); TRENKMANN, Klaus, 07407 Rudolstadt (DE); JAFELD, Markus, 50226 Frechen (DE); GLÖCKLER, Bernd, 63486 Bruchköbel (DE)
(74) Vertreter: Kruspig, Volkmar
(86) Internationale Anmeldenummer: PCT/EP2016/062939
(87) Internationale Veröffentlichungsnummer: WO 2016/202653

(56) Entgegenhaltungen:
- EP-A1- 0 309 126
- CN-A- 103 073 027
- US-A- 4 748 815
- US-A1- 2006 246 385
- US-A1- 2010 296 995

## Beschreibung

Die vorliegende Erfindung betrifft ein Verfahren zur Herstellung von Alkalimetallcyaniden als Feststoff sowie nach diesem Verfahren hergestellte Alkalimetallcyanide.

Alkalimetallcyanide haben zahlreiche Anwendungen. Ein besonderes wichtiges Anwendungsgebiet ist der Einsatz zur Gewinnung von Gold, Silber und anderen Metallen in der Cyanidlaugerei. Andere Anwendungsgebiete sind die Galvanotechnik sowie das Härten von Stahl. Auch als Ausgangsstoff in der chemischen Synthese finden Alkalimetallcyanide zahlreiche Anwendungen. Ein Beispiel ist hier der Einsatz zur Synthese von Nitrilen, die vielfältige Anwendung in der chemischen Industrie findet. Ein technisch besonders wichtiges Alkalimetallcyanid ist das Natriumcyanid.

Ein wichtiges Verfahren zur Herstellung von Alkalimetallcyaniden nutzt die Reaktion von Cyanwasserstoff HCN (Blausäure) mit Alkalimetallhydroxiden. Zur industriellen Herstellung von HCN als Ausgangssubstanz für diese Synthese von Alkalimetallcyaniden sind im Stand der Technik eine Reihe von Verfahren beschrieben. Ein besonders häufig eingesetztes Verfahren ist das sogenannte Andrussow-Verfahren. Beim Andrussow-Verfahren erfolgt die Herstellung von HCN durch katalysierte Reaktion von Methan, Ammoniak und Luftsauerstoff. Typischerweise wird dabei ein Gemisch von Ammoniak und Methan an Platin-Netzen unter Einblasen von reinem Sauerstoff bei hohen Temperaturen zur Reaktion gebracht. Das durch das Andrussow-Verfahren hergestellte unmittelbare Synthese Produkt stellt dabei eine Mischung von mehreren Komponenten dar, wobei neben dem erwünschten Reaktionsprodukt HCN insbesondere unreagierter Ammoniak, Wasserstoff, Stickstoff und Kohlenoxide vorliegen.

Ein großes Problem bei den bisherigen Verfahren zur Herstellung von Alkalimetallcyaniden ist die Entsorgung der stets anfallenden cyanidhaltigen Abgase und Abwässer. Nach den bisherigen Verfahren war es stets nötig, einen erheblichen Anteil der entstehenden cyanidhaltigen Abwässer einer aufwendigen Aufarbeitung zu unterziehen. Auch die Entgiftung der cyanidhaltigen Abgase führt immer wieder zu Problemen.

Gemäß dem im Stand der Technik beschriebenen Verfahren zur Herstellung von Alkalimetallcyaniden wird in der Regel so vorgegangen, dass das HCN-haltige Reaktionsgas nach der Reaktion durch Abkühlen verflüssigt und anschließend die Blausäure aufgereinigt wird. Hierzu sind aufwendige Reinigungsverfahren, wie beispielsweise eine Rektifikation, notwendig. Die so aufgereinigte flüssige Blausäure wird dann gemäß diesem Verfahren aus dem Stand der Technik mit Alkalimetallhydroxid, typischerweise Natriumhydroxid, zur Reaktion gebracht, um Natriumcyanid zu erhalten. Wenn das Natriumcyanid als Feststoff hergestellt werden soll, so muss in einem weiteren Schritt eine Kristallisation erfolgen.

Diese Entsorgung ist besonders aufwendig, da Natriumcyanid und andere Alkalimetallcyanide hochgiftig sind. In der Regel erfolgt die Entsorgung durch Zugabe von Wasserstoffperoxid, wobei das Natriumcyanid zu Natriumcyanat oxidiert wird. Unter Umständen sind noch weitere Schritte erforderlich, bevor eine endgültige Entsorgung der entgifteten Abwässer erfolgen kann. Dies führt zu einem hohen Kostenaufwand.

Es sind auch alternative Ausführungsformen im Stand der Technik beschrieben, bei denen das Andrussow-Reaktionsgas als solches mit einer Natriumhydroxidlösung zur Reaktion gebracht wird um Natriumcyanid herzustellen. Diese Prozessführung ist bislang nur in wenigen Fällen verwirklicht worden und wurde bislang vorwiegend verwendet, um die Natriumcyanidlösung, die aus der Reaktion des blausäurehaltigen Gases mit dem Natriumhydroxid entsteht als Endprodukt direkt zu vertreiben. Eine Verfahrensführung, bei der das Andrussow-Reaktionsgas in der Gasphase mit Natriumhydroxid zur Reaktion gebracht wird und als Endprodukt festes Natriumcyanid erzeugt wurde, wurde bisher eher selten verwirklicht. Der Grund dafür, dass eine solche Reaktionsführung bislang im Stand der Technik eher selten verwirklicht wurde, ist vor allem in der Schwierigkeit im Hinblick auf die Verunreinigung der Natriumcyanid Mutterlauge zu sehen. Durch die direkte Reaktion des Andrussow-Reaktionsgases in der Gasphase mit dem Natriumhydroxid entstehen zahlreiche Nebenprodukte, die sich bei der Kristallisation des Natriumcyanids entweder als Verunreinigung mit abscheiden oder aber als Verunreinigung in der Natriumcyanid Mutterlauge verbleiben. Diese Verunreinigungen, die in der Natriumcyanid Mutterlauge verbleiben, führen dazu, dass eine Rückführung der Natriumcyanid Mutterlauge nur in äußerst begrenztem Umfang möglich ist, da eine solche Rückführung zu der immer weiteren Anreicherung der Nebenprodukte führen würde. Besonders störend sind die Nebenprodukte Natriumformiat und Natriumcarbonat, die sich bei einer solchen Rückführung immer stärker anreichern. Dies würde eine ständige Entsorgung der Natriumcyanid Mutterlauge notwendig machen, was zu einer geringen Ausbeute des Prozesses, zu hohen Kosten und zu einer nicht-vertretbaren Umweltbelastung führen würde.

Die EP 0 309 126 A1 offenbart ein Verfahren zur Herstellung wasserfreier Natriumcyanidkristalle durch Absorption von Cyanwasserstoffsynthesegas, das Kohlenstoff- und Wasseroxide in wässrigem Natriumhydroxid enthält, in einem Absorber und Zuführen der Natriumcyanidlösung, die aus der Absorption resultiert in einem Verdampfungskristallisator, um eine Aufschlämmung von NaCN-Kristallen zu erzeugen.

Die US 2006/246385 A1 offenbart ein Verfahren und eine Vorrichtung zum Nachverbrennen von Kohlenwasserstoff mit Luft.

Die US 2010/296995 A1 offenbart ein Verfahren zur Herstellung von Natriumcyanidkristallen, umfassend; (a) Inkontaktbringen von unreinem Cyanwasserstoff und Natriumhydroxid in einem Reaktor unter Mischen für eine maximale Kontaktzeit von etwa 5 Sekunden; (b) Zuführen der resultierenden Mischung zu einem kontinuierlichen Verdampfungskristallisator, um eine Aufschlämmung von Natriumcyanidkristallen zu erzeugen; (c) Leiten der Aufschlämmung von Natriumcyanidkristallen aus dem Kristallisator über eine heiße Oberfläche, um auf der Oberfläche auszufällen und Natriumcarbonat zu entfernen, und Weiterleiten der Aufschlämmung zurück zum Kristallisator; und (d) Trennen der Natriumcyanidkristalle von der Aufschlämmung.

D4 CN 103 073 027 A stellt ein umweltfreundliches sauberes Herstellungsverfahren für hochreines Natriumcyanid bereit.

Vor diesem Hintergrund lag der vorliegenden Erfindung die Aufgabe zu Grunde, ein Verfahren zur Herstellung von Alkalimetallcyaniden bereitzustellen, das möglichst effizient durchgeführt werden kann und möglichst wenige Abgase und Abwässer erzeugt, insbesondere in Form von cyanidhaltigen Abgasen und Abwässern.

Die erfindungsgemäße Aufgabe wird durch ein Verfahren zur Herstellung von Alkalimetallcyanid als Feststoff gelöst, das die folgenden Schritte umfasst:
i) einen Absorptionsschritt in Form einer Absorption von Cyanwasserstoff aus einem cyanwasserstoffhaltigem Synthesegases in einer wässrigen Alkalimetallhydroxidlösung zur Herstellung einer wässrigen Alkalimetallcyanidlösung;
ii) einen Schritt der Aufbereitung der in Schritt i) angefallenen cyanidhaltigen Abgase, wobei
   iia) in einem ersten Verbrennungsschritt die in Schritt i) angefallenen cyanidhaltigen Abgase einer unterstöchiometrischen Verbrennung (Sauerstoffanteil in der Brennkammer kleiner als stöchiometrisch erforderlich) unterzogen werden;
   iib) in einem Kühlschritt das in Schritt iia) erhaltene Reaktionsgemisch durch Einbringen einer wässrigen Flüssigkeit gekühlt wird;
   iic) in einem zweiten Verbrennungsschritt das in Schritt iib) erhaltene Reaktionsgemisch durch Zufuhr von weiterem Sauerstoff unter überstöchiometrischen Bedingungen (Sauerstoffanteil in der Brennkammer größer als stöchiometrisch erforderlich) verbrannt wird;
iii) einen Kristallisationsschritt in Form des Einbringens der Alkalimetallcyanidlösung in einen evaporativen Kristallisator, der durch Beheizung, insbesondere durch Dampfbeheizung beheizt wird, und in dem ein Druck unterhalb des Atmosphärendrucks (unterhalb 1013 mbar) vorliegt;
iv) einen Schritt der Kondensation der in Schritt iii) anfallenden cyanidhaltigen Brüden zu einem cyanidhaltigen Brüdenkondensat;
v) einen Schritt der Rückführung, bei dem das in Schritt iv) gewonnene cyanidhaltige Brüdenkondensat als wässrige Flüssigkeit in Schritt iib) eingesetzt wird.

Erfindungsgemäß wird dabei ein besonderes Zusammenspiel des Aufbereitungsschritts ii) und des Kondensationsschritts iv) der in Schritt iii) anfallenden cyanidhaltigen Brüden vorgenommen.

Bei dem in Schritt i) beschriebenen Adsorptionsprozess in Form der Adsorption von Cyanwasserstoff aus einem cyanwasserstoffhaltigen Synthesegas in einer wässrigen Alkalimetallhydroxyllösung fallen stets cyanidhaltige Abgase an. Diese cyanidhaltigen Abgase werden durch Verbrennung entsorgt. Um eine möglichst vollständige Verbrennung der cyanidhaltigen Abgase zu erzielen, ist dabei eine Art der Verbrennung notwendig, in der Sauerstoff im Ergebnis im überstöchiometrischen Verhältnis eingesetzt wird. Problematisch ist hieran, dass bei unmittelbarem Einsatz von Sauerstoff im überstöchiometrischen Verhältnis relativ hohe Mengen an Stickoxiden entstehen, die ihrerseits ein erhebliches Abgasproblem darstellen. Daher wird eine dreistufige Vorgehensweise gewählt. In einem ersten Schritt wird eine unterstöchiometrische Verbrennung vorgenommen, also eine Verbrennung, bei der der Sauerstoffanteil in der Brennkammer, üblicherweise Luftsauerstoff, kleiner als stöchiometrisch erforderlich ist. Um im später vorgenommenen Schritt der überstöchiometrischen Verbrennung die Bildung von Stickoxiden zu unterdrücken, wird nachfolgend ein Kühlschritt vorgesehen, bei dem die Temperatur des aus der ersten Verbrennung resultierenden Abgases um einige Hundert Grad Celsius heruntergesetzt wird. Erst nach diesem Kühlschritt erfolgt dann ein zweiter Verbrennungsschritt des so heruntergekühlten Reaktionsgemisches durch Zufuhr von weiterem Sauerstoff, typischerweise Luftsauerstoff, unter überstöchiometrischen Bedingungen.

Im Sinne der vorliegenden Erfindung soll das stöchiometrische Verhältnis λ so definiert sein, dass λ=1 genau die Sauerstoffmenge bedeutet, die erforderlich ist, um die oxidierbaren Bestandteile im Abgas vollständig zu oxidieren.

Um auch die im Kristallisationsschritt iii) anfallenden cyanidhaltigen Gase aufzuarbeiten, wird in Schritt iv) eine Kondensation der cyanidhaltigen Brüden zu einem cyanidhaltigen Brüdenkondensat vorgenommen.

Erfindungsgemäß wird nun in Schritt v) der vorliegenden Erfindung ein Rückführungsschritt vorgesehen, bei dem das in Schritt iv) gewonnene cyanidhaltige Brüdenkondensat als wässrige Flüssigkeit im Kühlschritt iib) eingesetzt wird.

Durch diese Vorgehensweise wird es möglich, sowohl die im Adsorptionsschritt i) anfallenden cyanidhaltigen Abgase als auch die in Schritt iii) anfallenden cyanidhaltigen Abgase in einem einzigen Aufbereitungsschritt zu entgiften.

In einer besonders bevorzugten Ausführungsform wird durch das erfindungsgemäße Verfahren ein Alkalimetallcyanid in Form von Natriumcyanid hergestellt. Dabei wird in Schritt i) als Alkalimetallhydroxidlösung Natriumhydroxid (Natronlauge) eingesetzt.

Ein weiterer Vorteil des erfindungsgemäßen Verfahrens ist, dass in Schritt i) das cyanwasserstoffhaltige Synthesegas als nicht aufgereinigtes Gasgemisch unmittelbar aus einem Andrussow-Prozess eingesetzt werden kann. Durch die erfindungsgemäße Verfahrensführung wird es möglich, das in einem Andrussow-Prozess gebildete HCN-haltige Gasgemisch ohne jeden zwischengeschalteten Aufreinigungsschritt direkt mit der Alkalimetallhydroxidlösung zur Reaktion zu bringen.

Die Parameter des Aufbereitungsschrittes ii) werden dabei vorteilhaft so gewählt, dass die Erstverbrennung in Schritt iia) bei einer Temperatur von etwa 1000 bis 1500°C, insbesondere etwa 1200 bis 1400 °C und bei einem Verhältnis zwischen vorhandenem Sauerstoff und stöchiometrisch erforderlichem Sauerstoff (λ) zwischen etwa 0,75 bis 1, insbesondere etwa 0,8 bis 0,9 durchgeführt wird.

Durch Einstellung dieser Parameter wird eine sehr effiziente Verbrennung des Cyanwasserstoffs in den Abgasen bei gleichzeitig weitgehender Unterdrückung der Bildung von Stickoxiden erzielt.

In diesem Zusammenhang sind auch die Parameter des Kühlschrittes iib) wichtig, der vorteilhafterweise so vorgenommen wird, dass eine Menge von etwa 100 bis 250, insbesondere etwa 150 bis 200 Liter wässrige Flüssigkeit bezogen auf 1000 m³ des gasförmigen Reaktionsgemisches an der Einspritzstelle eingesetzt wird und die Temperatur auf etwa 800 bis 950 °C herabgesetzt wird.

Diese Herabsetzung der Temperatur des aus dem ersten Verbrennungsschritt resultierenden Reaktionsgemisches vor dem zweiten, überstöchiometrischen, Verbrennungsschritt trägt stark zur Unterdrückung der Bildung von Stickoxiden bei.

Besonders gute Ergebnisse werden erzielt, wenn der Verbrennungsschritt ii) so durchgeführt wird, dass die zweite Verbrennung in Schritt iic) bei einer Temperatur von etwa 700 bis <1000, insbesondere etwa 800 bis 900 °C und bei einem Verhältnis zwischen vorhandenem Sauerstoff und stöchiometrisch erforderlichem Sauerstoff (λ) zwischen >1 bis 2,5 insbesondere etwa 1,2 bis 2 durchgeführt wird.

Durch den hohen stöchiometrischen Überschuss von Sauerstoff im zweiten Verbrennungsschritt erfolgt eine nahezu vollständige Verbrennung des im Abgas vorhandenen Cyanwasserstoffs.

Von besonderer Bedeutung ist auch die erfindungsgemäß bevorzugte Einstellung der Parameter im Kristallisationsschritt iii).

Grundsätzlich gilt dabei, dass durch steigende Temperatur während des Kristallisationsschrittes im evaporativem Kristallisator die Bildung von Nebenprodukten, insbesondere in Form von Alkalimetallformiaten begünstigt wird. Unter diesem Gesichtspunkt sollte also möglichst kalt gearbeitet werden. Problematisch ist hier jedoch, dass sich bei tiefen Temperaturen sehr kleine Alkalimetallcyanidkristalle bilden, die in einem späteren Trennschritt nur sehr schwer abtrennbar sind. Durch das erfindungsgemäße Zusammenspiel der Beheizung im Kristallisationsschritt durch Dampfbeheizung in der Art, dass an der Kontaktfläche des Heizelementes zu der Alkalimetallcyanidlösung eine Temperatur von etwa 60 - 100°C, vorzugsweise etwa 70 - 90°C vorliegt mit einer Vakuumerzeugung im Kristallisationsschritt, so dass ein Druck von etwa 30 - 100 mbar, vorzugsweise etwa 60 - 65 mbar vorliegt, gelingt es, die Bildung von Nebenprodukten insbesondere in Form von Formiaten hinreichend zu unterdrücken und gleichzeitig gute Kristallgrößen zu erreichen.

Die Aufheizung der Kristallisationslösung in Schritt iii) erfolgt dabei typischerweise durch einen Rohrbündelwärmetauscher, der auf der Mantelseite mit Dampf beheizt ist. Dabei wird vorzugsweise Vakuumdampf eingesetzt, sodass Temperaturen von etwa 70 - 100°C, typischerweise etwa 70 - 90°C erreicht werden. Durch diese niedrigen Temperaturen kann die Bildung von Nebenprodukten, insbesondere in Form von Formiaten, weitgehend unterdrückt werden.

Durch das Zusammenspiel dieser Verfahrensparameter in Bezug auf die Beheizung mit der Vakuumerzeugung bei der ein Druck von etwa 30 - 100 mbar, vorzugsweise etwa 60 - 65 mbar vorliegt, werden auf der einen Seite hinreichende Kristallgrößen erreicht. Gewünscht sind Kristallgrößen von etwa 100 - 120 µm. Dadurch wird ein nahezu vollständiges Abtrennen der auskristallisierten Alkalimetallcyanide aus der Kristallisationslösung möglich.

Gleichzeitig kann durch diese Vorgehensweise die Bildung von Nebenprodukten in Form von Formiaten, weitgehend unterdrückt werden.

In einer besonders bevorzugten Ausführungsform des Trennschrittes iii) wird der evaporative Kristallisator so betrieben, dass ein Druck von etwa 50 mbar vorliegt, so dass die für die Kondensation der Brüdendämpfe eine Temperatur von etwa 33°C erforderlich ist. Unter diesen Bedingungen ist die Kondensation der Brüdendämpfe durch Kühlwasser bei den in den gemäßigten Zonen typischerweise vorliegenden Außentemperaturen in der Regel erreichbar.

Ferner offenbart ist auch ein Alkalimetallcyanid, insbesondere in Form von Natriumcyanid, das nach dem erfindungsgemäßen Verfahren hergestellt ist.

Das erfindungsgemäße Verfahren weist gegenüber den bisherigen Verfahren zur Herstellung von Alkalimetallcyaniden zahlreiche Vorteile auf. Durch das synergistische Zusammenwirken der Verfahrensparameter wird es einerseits möglich, einen geschlossenen Kreislauf im Hinblick auf die im Verfahren anfallenden cyanidhaltigen Brüden zu erreichen. Dies geschieht in besonders effizienter Art und Weise, da die während der Kristallisation anfallenden cyanidhaltigen Brüden gemeinsam mit dem im Absorptionsprozess anfallenden cyanidhaltigen Abgasen entsorgt werden können und gleichzeitig als Kühlflüssigkeit dienen. Auch im Hinblick auf die in der Kristallisation anfallende cyanidhaltige Mutterlauge kann durch die erfindungsgemäße Verfahrensführung ein geschlossener Kreislauf erreicht werden. Gleichzeitig wird es durch das erfindungsgemäße Verfahren möglich, dass cyanwasserstoffhaltiges Synthesegas ohne jeden Kondensations- und Aufreinigungsschritt direkt mit der Alkalimetallhydroxyd-Lösung zur Reaktion zu bringen. Dies führt zu einer wesentlich einfacheren Verfahrensführung und zum Einsparen von Kosten.

## Patentansprüche

1. Verfahren zur Herstellung von Alkalimetallcyaniden als Feststoff, umfassend die Schritte:
i) einen Absorptionsschritt in Form einer Absorption von Cyanwasserstoff aus einem cyanwasserstoffhaltigem Synthesegases in einer wässrigen Alkalimetallhydroxidlösung zur Herstellung einer wässrigen Alkalimetallcyanidlösung;
ii) einen Schritt der Aufbereitung der in Schritt i) angefallenen cyanidhaltigen Abgase, wobei
iia) in einem ersten Verbrennungsschritt die in Schritt i) angefallenen cyanidhaltigen Abgase einer unterstöchiometrischen Verbrennung (Sauerstoffanteil in der Brennkammer kleiner als stöchiometrisch erforderlich) unterzogen werden;
iib) in einem Kühlschritt das in Schritt iia) erhaltene Reaktionsgemisch durch Einbringen einer wässrigen Flüssigkeit gekühlt wird;
iic) in einem zweiten Verbrennungsschritt das in Schritt iib) erhaltene Reaktionsgemisch durch Zufuhr von weiterem Sauerstoff unter überstöchiometrischen Bedingungen (Sauerstoffanteil in der Brennkammer größer als stöchiometrisch erforderlich) verbrannt wird;
iii) einen Kristallisationsschritt in Form des Einbringens der Alkalimetallcyanidlösung in einen evaporativen Kristallisator, der durch Beheizung, insbesondere durch Dampfbeheizung beheizt wird, und in dem ein Druck unterhalb des Atmosphärendrucks (unterhalb 1013 mbar) vorliegt;
iv) einen Schritt der Kondensation der in Schritt iii) anfallenden cyanidhaltigen Brüden zu einem cyanidhaltigen Brüdenkondensat;
v) einen Schritt der Rückführung, bei dem das in Schritt iv) gewonnene cyanidhaltige Brüdenkondensat als wässrige Flüssigkeit in Schritt iib) eingesetzt wird.

2. Verfahren nach Anspruch 1, **dadurch gekennzeichnet, dass** als Alkalimetallcyanid Natriumcyanid gebildet wird.

3. Verfahren nach Anspruch 1 oder 2, **dadurch gekennzeichnet, dass** als Cyanwasserstoffsynthesegas ein nicht aufgereinigtes Gasgemisch aus einem Andrussow-Prozess eingesetzt wird.

4. Verfahren nach mindestens einem der vorhergehenden Ansprüche, **dadurch gekennzeichnet, dass** die Erstverbrennung in Schritt iia) bei einer Temperatur von etwa 1000 bis 1500 °C, insbesondere etwa 1200 bis 1400 °C und bei Verhältnis zwischen vorhandenem Sauerstoff und stöchiometrisch erforderlichem Sauerstoff (λ) zwischen 0,75 bis 1, insbesondere etwa 0,8 bis 0,9 durchgeführt wird.

5. Verfahren nach mindestens einem der vorhergehenden Ansprüche, **dadurch gekennzeichnet, dass** im Kühlschritt iib) eine Menge von etwa 100 bis 250, insbesondere etwa 150 bis 200 Liter wässrige Flüssigkeit bezogen auf 1000 m³ des gasförmigen Reaktionsgemisches an der Einspritzstelle eingesetzt wird und die Temperatur auf etwa 800 bis 950 °C herabgesetzt wird.

6. Verfahren nach mindestens einem der vorhergehenden Ansprüche, **dadurch gekennzeichnet, dass** die zweite Verbrennung in Schritt iic) bei einer Temperatur von etwa 700 bis <1000, insbesondere etwa 800 bis 900 °C und bei einem Verhältnis zwischen vorhandenem Sauerstoff und stöchiometrisch erforderlichem Sauerstoff (λ) zwischen >1 bis 2,5 insbesondere etwa 1,2 bis 2 durchgeführt wird.

7. Verfahren nach mindestens einem der vorhergehenden Ansprüche, **dadurch gekennzeichnet, dass** der Kristallisationsschritt iii) so durchgeführt wird, dass der evaporative Kristallisator durch Dampfbeheizung so beheizt wird, dass an der Kontaktfläche des Heizelementes zu der Alkalimetallcyanidlösung eine Temperatur von etwa 60 bis 100 °C, vorzugsweise etwa 70 bis 90°C vorliegt und ein Druck von etwa 30 bis 100 mbar, vorzugsweise etwa 60 bis 65 mbar vorliegt.

## Claims

1. Method for producing alkali metal cyanides as solids, comprising the steps:
i) an absorption step in the form of absorption of hydrogen cyanide from a hydrogen-cyanide-containing synthesis gas in an aqueous alkali metal hydroxide solution to produce an aqueous alkali metal cyanide solution;
ii) a preparation step for the cyanide-containing waste gases obtained in step i), wherein
iia) in a first combustion step, the cyanide-containing waste gases obtained in step i) are subjected to substoichiometric combustion (oxygen content in the combustion chamber smaller than stoichiometrically required);
iib) in a cooling step, the reaction mixture obtained in step iia) is cooled by introducing an aqueous liquid;
iic) in a second combustion step, the reaction mixture obtained in step iib) is combusted by supplying further oxygen under superstoichiometric conditions (oxygen content in the combustion chamber greater than stoichiometrically required);
iii) a crystallization step in the form of introducing the alkali metal cyanide solution into an evaporative crystallizer which is heated by heating, in particular by steam heating, and in which a pressure below atmospheric pressure (below 1013 mbar) is present;
iv) a condensation step for the cyanide-containing vapors produced in step iii) to a cyanide-containing vapor condensate;
v) a recirculation step in which the cyanide-containing vapor condensate obtained in step iv) is used as an aqueous liquid in step iib).

2. Method according to claim 1, **characterized in that** sodium cyanide is formed as the alkali metal cyanide.

3. Method according to claim 1 or 2, **characterized in that** an unpurified gas mixture from an Andrussow process is used as hydrogen cyanide synthesis gas.

4. Method according to at least one of the preceding claims, **characterized in that** the initial combustion in step iia) is carried out at a temperature of about 1000 to 1500°C, in particular about 1200 to 1400°C, and at ratios between oxygen present and stoichiometrically required oxygen (λ) of between 0.75 and 1, in particular about 0.8 to 0.9.

5. Method according to at least one of the preceding claims, **characterized in that** in the cooling step iib) an amount of about 100 to 250, in particular about 150 to 200 liters of aqueous liquid based on 1000 m³ of the gaseous reaction mixture is used at the injection point and the temperature is reduced to about 800 to 950°C.

6. Method according to at least one of the preceding claims, **characterized in that** the second combustion in step iic) is carried out at a temperature of about 700 to <1000, in particular about 800 to 900°C and at a ratio between oxygen present and stoichiometrically required oxygen (λ) of between >1 to 2.5, in particular about 1.2 to 2.

7. Method according to at least one of the preceding claims, **characterized in that** crystallization step iii) is carried out such that the evaporative crystallizer is heated by steam heating such that a temperature of about 60 to 100°C, preferably about 70 to 90°C, is present at the contact surface of the heating element to the alkali metal cyanide solution and a pressure of about 30 to 100 mbar, preferably about 60 to 65 mbar, is present.

## Revendications

1. Procédé de production de cyanures de métaux alcalins sous forme solide, comprenant les étapes suivantes :
i) une étape d'absorption sous forme d'absorption de cyanure d'hydrogène à partir d'un gaz de synthèse contenant du cyanure d'hydrogène dans une solution aqueuse d'hydroxyde de métal alcalin pour préparer une solution aqueuse de cyanure de métal alcalin ;
ii) une étape de traitement des gaz résiduaires contenant du cyanure obtenus dans l'étape i), dans laquelle
iia) dans une première étape de combustion, les gaz résiduaires contenant du cyanure obtenus à l'étape i) sont soumis à une combustion sous-stœchiométrique (teneur en oxygène dans la chambre de combustion inférieure à la teneur stœchiométriquement requise) ;
iib) dans une étape de refroidissement, le mélange réactionnel obtenu dans l'étape iia) est refroidi par introduction d'un liquide aqueux ;
iic) dans une seconde étape de combustion, le mélange réactionnel obtenu à l'étape iib) est brûlé par apport d'oxygène supplémentaire dans des conditions sur-stœchiométriques (teneur en oxygène dans la chambre de combustion supérieure à la teneur stœchiométriquement requise) ;
iii) une étape de cristallisation sous la forme de l'introduction de la solution de cyanure de métal alcalin dans un cristallisateur évaporatif qui est chauffé par chauffage, en particulier par chauffage à la vapeur, et dans lequel règne une pression inférieure à la pression atmosphérique (inférieure à 1013 mbar) ;
iv) une étape de condensation des vapeurs contenant du cyanure obtenues à l'étape iii) en un condensat de vapeur contenant du cyanure ;
v) une étape de recyclage, dans laquelle le condensat de vapeur contenant du cyanure obtenu à l'étape iv) est utilisé comme liquide aqueux à l'étape iib).

2. Procédé selon la revendication 1, **caractérisé en ce que** le cyanure de sodium est formé comme cyanure de métal alcalin.

3. Procédé selon la revendication 1 ou 2, **caractérisé en ce qu'**un mélange gazeux non purifié provenant d'un procédé Andrussow est utilisé comme gaz de synthèse contenant du cyanure d'hydrogène.

4. Procédé selon l'une au moins des revendications précédentes, **caractérisé en ce que** la première combustion à l'étape iia) est réalisée à une température d'environ 1000 à 1500 °C, en particulier d'environ 1200 à 1400 °C, et à un rapport entre l'oxygène présent et l'oxygène stœchiométriquementrequis (λ) compris entre 0,75 et 1, en particulier entre 0,8 et 0,9.

5. Procédé selon l'une au moins des revendications précédentes, **caractérisé en ce que** dans l'étape de refroidissement iib), une quantité d'environ 100 à 250, en particulier d'environ 150 à 200 litres de liquide aqueux par rapport à 1000 m³ de mélange réactionnel gazeux est introduite à l'emplacement d'injection, et la température est baissée pour passer à environ 800 à 950 °C.

6. Procédé selon l'une au moins des revendications précédentes, **caractérisé en ce que** la seconde combustion à l'étape iic) est réalisée à une température d'environ 700 à < 1000, en particulier d'environ 800 à 900 °C, et à un rapport entre l'oxygène présent et l'oxygène stœchiométriquementrequis (λ) compris entre > 1 et 2,5, en particulier entre environ 1,2 et 2.

7. Procédé selon l'une au moins des revendications précédentes, **caractérisé en ce que** l'étape de cristallisation iii) est réalisée de telle sorte que le cristallisateur évaporatif est chauffé par chauffage à la vapeur de telle sorte qu'une température d'environ 60 à 100 °C, de préférence d'environ 70 à 90 °C, et une pression d'environ 30 à 100 mbar, de préférence d'environ 60 à 65 mbar, se présentent à la surface de contact de l'élément de chauffage avec la solution de cyanure de métal alcalin.
